# EUROPÄISCHE PATENTSCHRIFT

(11) **EP 2 931 547 B1**
(45) Veröffentlichungstag und Bekanntmachung des Hinweises auf die Patenterteilung: **07.11.2018**
(21) Anmeldenummer: 13792855.2
(22) Anmeldetag: 09.11.2013
(51) Int. Cl.: B60L 11/18, B60L 3/00, B60L 3/12, H04M 1/725, H04L 29/08, B60R 25/20

(54) **VERFAHREN ZUM STARTEN EINES FAHRZEUGS**
METHOD FOR STARTING A VEHICLE
PROCÉDÉ POUR DÉMARRER UN VÉHICULE

(30) Priorität: 11.12.2012 DE 102012024140
(43) Veröffentlichungstag der Anmeldung: 21.10.2015
(73) Patentinhaber: Daimler AG, 70327 Stuttgart (DE)
(72) Erfinder: HEIDRICH, Hans-Jörg, 89075 Ulm (DE)
(74) Vertreter: JENSEN & SON
(86) Internationale Anmeldenummer: PCT/EP2013/003380
(87) Internationale Veröffentlichungsnummer: WO 2014/090359

(56) Entgegenhaltungen:
- EP-A1- 1 211 120
- EP-A1- 1 211 120
- DE-A1- 10 258 865
- DE-A1- 10 258 865
- FR-A1- 2 815 302
- FR-A1- 2 815 302
- US-A1- 2011 003 215
- US-A1- 2011 003 215

## Beschreibung

Die Erfindung betrifft ein Verfahren zum Starten eines Fahrzeugs mit einem Brennstoffzellensystem nach der im Oberbegriff von Anspruch 1 näher definierten Art. Eine Vorrichtung und ein Verfahren zum Starten eines Fahrzeugs mit einem Brennstoffzellensystem ist aus der gattungsgemäßen EP 1 211 120 A1 bekannt. Bei dem dort beschriebenen System wird über eine Fernauslöseeinheit ein Startvorgang des Brennstoffzellensystems ausgelöst, wobei insbesondere Funk, ein Telekommunikationsnetz oder das Internet genutzt werden kann. Über ein Mobiltelefon oder eine Internetverbindung kann der Start somit eingeleitet oder eine Startzeit programmiert werden. Die Problematik hinter der Anmeldung war die damals vorherrschende Tatsache, dass Brennstoffzellensysteme vergleichsweise lange benötigten, bis sie gestartet werden konnten. Dieser Problematik wurde durch die Erfindung weitgehend abgeholfen. Bei heutigen Brennstoffzellensystemen tritt diese Problematik in den meisten Fällen nicht mehr auf. Diese können annähernd instantan gestartet werden, sobald diese sich in einem Temperaturfenster bewegen, in dem der Start nicht durch eine eventuelle Eisbildung in der Brennstoffzelle verzögert wird.

Weitere Anmeldungen zum allgemeinen Stand der Technik, welche die Thematik einer Fernauslösung des Starts eines Fahrzeugs beleuchten, sind beispielsweise die US 2006/0197677 A1 oder die US 2011/0086668 A1.

Die Druckschrift DE10258865 wird als nächstliegender Stand der Technik angesehen und offenbart die Präambel des unabhängigen Anspruchs 1. Die Aufgabe der hier vorliegenden Erfindung besteht nun darin, das Startverhalten eines Brennstoffzellensystems bei Gefrierbedingungen, also bei Temperaturen, bei denen Wasser in dem Brennstoffzellensystem gegebenenfalls eingefroren sein kann, zu optimieren und für den Nutzer eines mit dem Brennstoffzellensystem ausgestatteten Fahrzeugs komfortabler zu gestalten.

Erfindungsgemäß wird diese Aufgabe durch die Merkmale im kennzeichnenden Teil des Anspruchs 1 gelöst. Vorteilhafte Ausgestaltungen und Weiterbildungen ergeben sich aus den hiervon abhängigen Unteransprüchen.

Das erfindungsgemäße Verfahren zum Starten eines Fahrzeugs mit einem Brennstoffzellensystem zur Bereitstellung von elektrischer Antriebsleistung in dem Fahrzeug nutzt, ähnlich wie der gattungsgemäße Stand der Technik, eine Fernauslöseeinheit, welche den Startvorgang unabhängig von der Anwesenheit des Nutzers in unmittelbarer Nähe des Fahrzeugs auslösen kann. Erfindungsgemäß ist es dabei vorgesehen, dass der Start über die Fernauslöseeinheit nur dann erfolgt, wenn einerseits ein Startsignal der Fernauslöseeinheit vorliegt, und wenn gleichzeitig eine erfasste Temperatur in dem Fahrzeug, dem Brennstoffzellensystem und/oder der Umgebung des Fahrzeugs unter einem vorgegebenen Temperaturgrenzwert liegt. Ein über die Fernauslöseeinheit ausgelöster Start findet bei dem erfindungsgemäßen Verfahren also nur dann statt, wenn Gefrierstartbedingungen vorliegen und der Start mit hoher Wahrscheinlichkeit in einem Zustand des Brennstoffzellensystems erfolgt, in welchem die Gefahr besteht, dass flüssiges Wasser in dem Brennstoffzellensystem eingefroren ist. Unter diesen Bedingungen braucht der Start des Brennstoffzellensystems auch bei den heutigen Brennstoffzellensystemen noch vergleichsweise lange, da beispielsweise Ventileinrichtungen und dergleichen gegebenenfalls erst beheizt und aufgetaut werden müssen. Durch das erfindungsgemäße Verfahren lässt sich die gefühlte Startzeit für den Nutzer des Fahrzeugs entsprechend abkürzen, weil beispielsweise bereits mit einer Annäherung des Nutzers an sein Fahrzeug der Gefrierstartvorgang des Brennstoffzellensystems anfängt, und das Brennstoffzellensystem dann für den Nutzer des Fahrzeugs nach dem Einsteigen und Drücken des Startknopfes sehr schnell zur Verfügung steht.

In einer besonders günstigen Ausgestaltung des erfindungsgemäßen Verfahrens ist es ferner vorgesehen, dass der vorgegebene Temperaturgrenzwert bei etwa 0 - 5° C, bevorzugt ca. 2° C vorgegeben wird. Eine solche Vorgabe idealerweise knapp über 0° C stellt sicher, dass auch bei einem eventuellen Abweichen der gemessenen Temperatur von der Temperatur an den hinsichtlich des Einfrierens kritischen Stellen des Brennstoffzellensystems eine sichere und zuverlässige Auslösung des über die Fernauslöseeinheit angeforderten Gefrierstarts immer dann erfolgt, wenn prinzipiell die Gefahr besteht, dass Wasser in dem Brennstoffzellensystem eingefroren sein kann.

In einer weiteren sehr günstigen Ausgestaltung des erfindungsgemäßen Verfahrens ist es ferner vorgesehen, dass die Fernauslöseeinheit das Startsignal nach einer aktiven Betätigung sendet. Ein solches Senden des Startsignals, nach einer aktiven Betätigung, ermöglicht eine aktive Einflussnahme des Nutzers des Fahrzeugs, welcher beispielsweise, ähnlich wie beim Öffnen des Fahrzeugs, über eine Fernbedienung der Zentralverriegelung der Start aktiv ausgelöst werden kann, wenn der Nutzer sich dem Fahrzeug annähert.

Ergänzend ist es in der Ausgestaltung des erfindungsgemäßen Verfahrens vorgesehen, dass die Fernauslöseeinheit das Startsignal automatisch sendet, wenn vorgegebene Bedingungen vorliegen, insbesondere wenn ein vorgegebener Abstand der Fernauslöseeinheit zu dem Fahrzeug unterschritten wird. Neben der aktiven Ansteuerung ist es auch möglich, das Senden des Startsignals automatisch auszulösen, beispielsweise immer dann, wenn der Nutzer des Fahrzeugs mit der Fernauslöseeinheit sich an das Fahrzeug annähert, beispielsweise in einen Bereich von weniger als vorzugsweise ca. 100 m um das Fahrzeug eintritt. Eine weitere Ausgestaltung dieser Idee sieht es dabei vor, dass das Senden des Startsignals von der Fernauslöseeinheit trotz Vorliegen der vorgegebenen Bedingungen erst dann erfolgt, wenn das Senden aktiv bestätigt wird. Dies ermöglicht es dem Nutzer aktiv Einfluss zu nehmen, beispielsweise wenn er das Fahrzeug vor dem Haus abgestellt hat und am Fahrzeug vorbei geht, um beispielsweise zu Fuß Besorgungen zu machen oder dergleichen. In diesem Fall kann das Auslösen des Startvorgangs, welcher vergleichsweise energieintensiv ist, verhindert werden, indem der Fahrer von der Fernauslöseeinheit entsprechend benachrichtigt wird, dass ein Start ausgelöst werden soll. Bestätigt er dies nicht, unterbleibt der Start.

In der Ausgestaltung hiervon ist es dabei vorgesehen, dass beim Unterschreiten eines vorgegebenen Minimalabstandes, insbesondere ca. 2 - 5 m zum Fahrzeug, das Startsignal ohne aktive Betätigung gesendet wird. Nähert sich der Nutzer soweit an das Fahrzeug an, dass er einen vorgegebenen Minimalabstand unterschreitet, dann ist mit hoher Wahrscheinlichkeit davon auszugehen, dass er das Fahrzeug starten will. In dieser Situation ist es gemäß der vorteilhaften Weiterbildung möglich, dass auf die aktive Bestätigung verzichtet wird, und dass das Startsignal in jedem Fall gesendet wird.

Gemäß einer sehr günstigen Weiterbildung des erfindungsgemäßen Verfahrens kann als Fernauslöseeinheit dabei eine mobile Kommunikationseinrichtung, wie z.B. ein Mobiltelefon oder ein in einem Tablet-PC integrierten Mobiltelefon, insbesondere ein auf dem Mobiltelefon ablaufendes Programm, genutzt werden. Eine solche Nutzung eines Mobiltelefons bzw. eines Programms, einer sogenannten App, auf dem Mobiltelefon ermöglicht die Anwendung mit annähernd jedem Mobiltelefon, sodass kein zusätzliches Bauteil als Fernauslöseeinheit mitgeführt werden muss. Über das Funknetz des Mobiltelefons bzw. ein GSM- oder UMTS-Netz oder eine Internetanbindung kann dann das Startsignal von der Fernauslöseeinheit, in diesem Fall dem Mobiltelefon, zu dem Fahrzeug gesendet werden.

Auch bei der Verwendung eines Mobiltelefons als Fernauslöseeinheit kann insbesondere der Abstand zwischen der Fernauslöseeinheit bzw. dem Mobiltelefon und dem Fahrzeug als Bedingung zum Auslösen des Starts in der oben bereits beschriebenen Art und Weise genutzt werden. Gemäß einer vorteilhaften Ausgestaltung hiervon, kann es dabei vorgesehen sein, dass beim Abstellen des Fahrzeugs die Abstellposition des Fahrzeugs über das Mobiltelefon erfasst und gespeichert wird, wonach durch einen Positionsvergleich zwischen dem Mobiltelefon und der gespeicherten Abstellposition der Abstand zwischen dem Fahrzeug und dem Mobiltelefon ermittelt wird. Typischerweise haben heutige Mobiltelefone die Möglichkeit über GPS, die Nutzung von WLAN-Daten oder die Auswertung von Mobilfunkzelldaten ihre Position vergleichsweise exakt zu bestimmen. Diese Positionsbestimmung kann insbesondere beim Abstellen des Fahrzeugs erfolgen, wobei diese Abstellposition gespeichert wird. Entfernt sich danach der Nutzer mit seinem Mobiltelefon als Fernauslöseeinheit von dem Fahrzeug, wird dieses entsprechend registriert. Nähert er sich später wieder dem Fahrzeug an, dann kann durch eine ständige Positionserfassung des Mobiltelefons und den Vergleich mit der zuvor gespeicherten Abstellposition des Fahrzeugs ein exakter Abstand zwischen dem Fahrzeug und dem Mobiltelefon ermittelt werden. Unterschreitet dieser den vorgegebenen Wert, dann kann die oben bereits beschriebene Prozedur zur Auslösung des Startsignals ablaufen, beispielsweise vollautomatisch, mit einer entsprechenden Bestätigung durch den Nutzer oder auch einer abstandsabhängigen optionalen Bestätigung.

Weitere vorteilhafte Ausgestaltungen des erfindungsgemäßen Verfahrens ergeben sich aus den restlichen abhängigen Unteransprüchen und werden anhand des Ausführungsbeispiels deutlich, welches nachfolgend unter Bezugnahme auf die Figur näher beschrieben ist.

Die einzige beigefügte Figur zeigt ein prinzipmäßig angedeutetes Fahrzeug mit einem Brennstoffzellensystem, sowie einen Nutzer des Fahrzeugs mit einer Fernauslöseeinheit in drei verschiedenen, nicht maßstäblichen Abständen zu dem Fahrzeug.

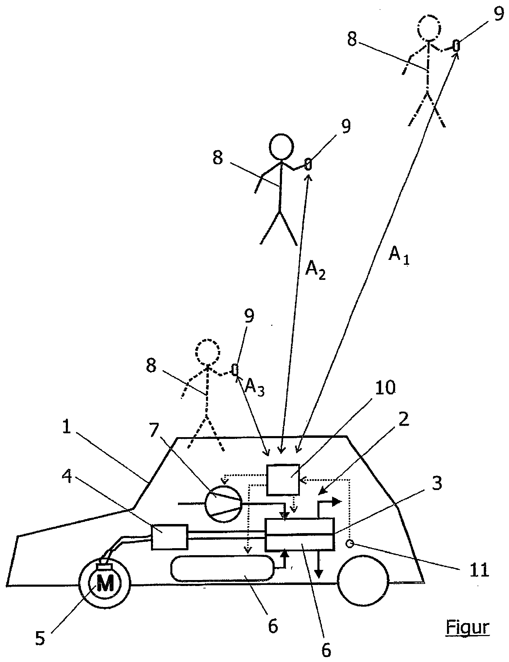

In der Darstellung der Figur ist ein prinzipmäßig angedeutetes Fahrzeug 1 mit einem Brennstoffzellensystem 2 zu erkennen. Das Brennstoffzellensystem 2 kann dabei in an sich bekannter Art und Weise, beispielsweise als PEM-Brennstoffzellensystem 2, aufgebaut sein. Es ist entsprechend komplex und dem Fachmann in seinem detaillierten Aufbau bekannt. Zur Vereinfachung der Darstellung wurde daher in Figur 2 lediglich eine Brennstoffzelle 3 prinzipmäßig angedeutet. Über die Brennstoffzelle 3 gelangt elektrische Leistung zu einer Leistungselektronik 4, welche beispielsweise einen angedeuteten Fahrmotor 5 in an sich bekannter Art und Weise mit elektrischer Antriebsleistung versorgt. Als weitere Komponenten sind lediglich ein Druckgasspeicher 6 für Wasserstoff eingezeichnet sowie eine Luftfördereinrichtung 7, welche die Luft- bzw. Sauerstoffversorgung der Brennstoffzelle 3 sicherstellt. Zusätzliche Komponenten des Brennstoffzellensystems wie beispielsweise Leitungen, Turbinen, Ventile und dergleichen sind dem Fachmann aus dem allgemeinen Stand der Technik bekannt. Sie sind hier nicht explizit dargestellt, aber selbstverständlich in einer der fachüblichen Ausgestaltungen in dem Brennstoffzellensystem 2 vorhanden.

Das Starten des Brennstoffzellensystems 2 ist bei der heutigen Technologie typischerweise kein Problem und kann nachdem ein Nutzer 8 des Fahrzeugs 1 in das Fahrzeug eingestiegen ist, nach dem Drücken eines Startknopfs sehr schnell erfolgen. Lediglich dann, wenn die Temperaturen so tief liegen, dass mit eingefrorenem Wasser im Bereich des Brennstoffzellensystems 2 zu rechnen ist, ist der Startvorgang etwas zeit- und energieintensiver. Für diesen speziellen Fall ist es nun vorgesehen, dass der Nutzer 8 eine Fernauslöseeinheit 9 bei sich trägt, welche beispielsweise in Form eines Programms auf einem Mobiltelefon realisiert sein kann. Beim Abstellen des Fahrzeugs 1 wird über die Fernauslöseeinheit 9, welche beispielsweise als Smartphone ausgestaltet ist, und welche in an sich bekannter Art und Weise über Möglichkeiten zur Ermittlung der exakten Position verfügt, die Abstellposition des Fahrzeugs 1 gespeichert. Entfernt sich der Nutzer 8 dann zusammen mit der Fernauslöseeinheit 9 von dem Fahrzeug, dann kann die Fernauslöseeinheit 9 immer wieder ihre eigene Position erfassen. Solange der Nutzer 8 einen vergleichsweise großen Abstand zu dem Fahrzeug 1 hält, ist nicht davon auszugehen, dass er das Fahrzeug 1 in nächster Zeit nutzen und starten will. Dies ist durch den strichpunktiert angedeuteten Nutzer 8 im Abstand A₁ zu dem Fahrzeug angedeutet. Nähert sich der Nutzer 8 mit seiner Fernauslöseeinheit 9 auf den mit A₂ bezeichneten Abstand von beispielsweise ca. 100 m zu dem Fahrzeug 1 an, dann geht das System davon aus, dass ein Start des Fahrzeugs 1 in Kürze bevorsteht. Die Fernauslöseeinheit 9 generiert dafür ein Startsignal und kann dieses an eine Steuereinheit 10 in dem Fahrzeug 1 senden. Im Bereich der Steuereinheit 10 wird außerdem ein Temperaturwert eines Temperatursensors 11 ausgewertet. Liegt dieser unterhalb einer vorgegebenen Grenztemperatur von beispielsweise 2° C, und liegt gleichzeitig ein Startsignal im Bereich der Steuereinheit 10 vor, dann wird der Gefrierstart des Brennstoffzellensystems 2 ausgelöst und dieses wird auf den bevorstehenden Start entsprechend vorbereitet, indem Komponenten geheizt und gegebenenfalls aufgetaut werden. Um eine unnötige Startvorbereitung zu verhindern, kann es dabei vorgesehen sein, dass die Fernauslöseeinheit 9, wenn sie den Abstand A₂ zu dem Fahrzeug 1 unterschreitet, den Nutzer 8, falls die Temperatur unter der Grenztemperatur liegt, auf das Startsignal hinweist und dieses erst dann sendet, wenn der Nutzer 8 dies bestätigt hat, beispielweise durch die Eingabe einer PIN-Nummer, eines Kennworts oder auch lediglich das Bestätigen über eine OK-Taste.

Unterschreitet der Nutzer 8 zusammen mit der Fernauslöseeinheit 9 den in der Darstellung der Figur mit A₃ bezeichneten Abstand, in welchem der Nutzer 8 gestrichelt dargestellt ist, dann kann das Startsignal von der Fernauslöseeinheit 9 an die Steuereinheit 10 gesendet werden, ohne dass es der Bestätigung bedarf, da der Abstand dann entsprechend klein ist, beispielsweise 2 m zu dem Fahrzeug 1 unterschreitet und somit davon auszugehen ist, dass der Nutzer 8 sich dem Fahrzeug 1 annähert, um dieses zu starten. Nach dem Einsteigen in das Fahrzeug 1 ist das Brennstoffzellensystem 2 aufgrund der in Abhängigkeit der Grenztemperatur und des Startsignals ausgelösten Startvorbereitung dann auch unter Gefrierstartbedingungen unmittelbar startbereit, sodass der Nutzer 8 ohne weitere Verzögerung das Brennstoffzellensystem 2 bzw. sein Fahrzeug 1 starten und in Betrieb nehmen kann. Hierdurch ergibt sich ein erheblicher Komfortgewinn für den Nutzer 8 des Brennstoffzellenfahrzeugs 1 beim Gefrierstart.

## Patentansprüche

1. Verfahren zum Starten eines Fahrzeugs (1) mit einem Brennstoffzellensystem (2), über das elektrishe Leistung zu einer Leistungselektronik (4) gelangt, welche einen Fahrmotor (5) mit elektrischer Antriebsleistung versorgt, wobei ein Startvorgang des Fahrzeugs (1) mit dem Brennstoffzellensystem (2) mittels einer Fernauslöseeinheit (9) unabhängig von einer Anwesenheit des Nutzers (8) in unmittelbarer Nähe des Fahrzeugs (1) gestartet werden kann,
und es sich bei der Fernauslöseeinheit (9) um eine mobile Kommunikationseinrichtung handelt und
wobei der Startvorgang mit einem Gefrierstart des Brennstoffzellensystems (2), in dem Komponenten geheizt und gegebenenfalls aufgetaut werden, über die mobile Kommunikationseinrichtung nur dann erfolgt,
a) wenn ein Startsignal der mobilen Kommunikationseinrichtung an eine Steuereinheit (10) in dem Fahrzeug (1) gesendet wird und
b) wenn gleichzeitig eine erfasste Temperatur in dem Fahrzeug (1), dem Brennstoffzellensystem (2) und der Umgebung des Fahrzeugs (1) unter einem vorgegebenen Temperaturgrenzwert liegt
**dadurch gekennzeichnet, dass**
die mobile Kommunikationseinrichtung das Startsignal anhand einer ständigen Positionserfassung der mobilen Kommunikationseinrichtung und des Vergleichs mit der zuvor gespeicherten Abstellposition des Fahrzeugs (1) vollautomatisch sendet, wenn der Nutzer (8) des Fahrzeugs (1) mit der mobilen Kommunikationseinrichtung sich an das Fahrzeug (1) annähert und wenn ein vorgegebener Abstand zwischen der mobilen Kommunikationseinrichtung und dem Fahrzeug (1) unterschritten wird.

2. Verfahren nach Anspruch 1,
**dadurch gekennzeichnet, dass**
der vorgegebene Temperaturgrenzwert bei 0 - 5° C, bevorzugt bei ca. 2° C, vorgegeben wird.

3. Verfahren nach Anspruch 1 oder 2,
**dadurch gekennzeichnet, dass**
die mobile Kommunikationseinrichtung das Startsignal nach einer aktiven Bestätigung durch den Nutzer (8) sendet.

4. Verfahren nach einem der vorherigen Ansprüche, **dadurch gekennzeichnet, dass** der vorgegebenen Abstand zwischen der mobilen Kommunikationseinrichtung und dem Fahrzeug (1) mit ca. 100 m vorgegeben wird.

5. Verfahren nach einem der vorherigen Ansprüche,
**dadurch gekennzeichnet, dass**
beim Unterschreiten eines vorgegebenen Minimalabstandes des Abstandes zwischen der mobilen Kommunikationseinrichtung und dem Fahrzeug (1), wie ca. 2 - 5 m, das Startsignal ohne aktive Bestätigung gesendet wird.

6. Verfahren nach einem der vorherigen Ansprüche,
**dadurch gekennzeichnet, dass**
zur Fernauslösung ein auf der mobilen Kommunikationseinrichtung ablaufendes Programm genutzt wird.

7. Verfahren nach einem der vorherigen Ansprüche,
**dadurch gekennzeichnet, dass** es sich bei der mobilen Kommunikationseinrichtung um ein Mobiltelefon, ein Smartphone oder einen Tablet-PC mit integriertem Mobiltelefon handelt.

8. Verfahren nach einem der vorherigen Ansprüche,
**dadurch gekennzeichnet, dass**
beim Abstellen des Fahrzeugs (1) eine Abstellposition des Fahrzeugs (1) über die mobile Kommunikationseinrichtung erfasst und gespeichert wird, wonach durch den Positionsvergleich zwischen der aktuell erfassten Position der mobilen Kommunikationseinrichtung und der gespeicherten Abstellposition des Fahrzeugs (1) der Abstand zwischen dem Fahrzeug (1) und der mobilen Kommunikationseinrichtung ermittelt wird.

## Claims

1. Method for starting a vehicle (1) with a fuel cell system (2), via which electric power reaches power electronics (4) supplying a drive motor (5) with electric drive power,
wherein a starting process of the vehicle (1) with the fuel cell system (2) can be initiated by means of a remote trigger unit (9) irrespective of a presence of the user (8) in the immediate vicinity of the vehicle (1), and wherein the remote trigger unit (9) is a mobile communication device,
and wherein the starting process only happens via the mobile communication device in a freeze start of the fuel cell system (2), in which components are heated and defrosted if necessary, if
a) a start signal of the mobile communication device is transmitted to a control unit (10) in the vehicle (1), and
b) temperatures detected in the vehicle (1), in the fuel cell system (2) and in the environment of the vehicle (1) simultaneously lie below a preset temperature limit value,
**characterised in that**
the mobile communication device transmits the start signal fully automatically on the basis of a continuous position detection of the mobile communication device and the comparison to the previously stored parking position of the vehicle (1) if the user (8) of the vehicle (1) approaches the vehicle (1) with the mobile communication device and if a preset distance between the mobile communication device and the vehicle (1) is undershot.

2. Method according to claim 1,
**characterised in that**
the preset temperature limit value is preset at 0 - 5°C, preferably at approximately 2°C.

3. Method according to claim 1 or 2,
**characterised in that**
the mobile communication device transmits the start signal after an active actuation by the user (8).

4. Method according to any of the preceding claims,
**characterised in that**
the preset distance between the mobile communication device and the vehicle (1) is preset at approximately 100 m.

5. Method according to any of the preceding claims,
**characterised in that**
if a preset minimum distance between the mobile communication device and the vehicle (1), e.g. approximately 2 to 5 m, is undershot, the start signal is transmitted without active actuation.

6. Method according to any of the preceding claims,
**characterised in that**
a programme running on the mobile communication device is used for remote triggering.

7. Method according to any of the preceding claims,
**characterised in that**
the mobile communication device is a mobile phone, a smartphone or a tablet PC with an integrated mobile phone.

8. Method according to any of the preceding claims,
**characterised in that**
when the vehicle (1) is parked, a parking position of the vehicle (1) is detected and stored by the mobile communication device, whereupon, by comparing the currently detected position of the mobile communication device to the stored parking position of the vehicle (1), the distance between the vehicle (1) and the mobile communication device is determined.

## Revendications

1. Procédé de démarrage d'un véhicule automobile (1) comprenant un système de pile à combustible (2) par lequel la puissance électrique arrive jusqu'à une électronique de puissance (4) qui alimente en puissance motrice un moteur de véhicule (5), un processus de démarrage du véhicule automobile (1) comprenant le système de pile à combustible (2) peut être amorcé au moyen d'une unité de déclenchement à distance (9) indépendamment d'une présence de l'utilisateur (8) à proximité immédiate du véhicule automobile (1), et l'unité de déclenchement à distance (9) est un dispositif de communication mobile et le processus de démarrage, avec un démarrage à froid du système de pile à combustible (2) pendant lequel les composants sont chauffés et le cas échéant dégelés, étant mis en oeuvre par le dispositif de communication mobile uniquement
a) lorsqu'un signal de démarrage du dispositif de communication mobile est envoyé à une unité de commande (10) dans le véhicule automobile (1) et
b) lorsque simultanément une température détectée dans le véhicule automobile (1), dans le système de pile à combustible (2) et dans l'environnement du véhicule automobile (1) est inférieure à une valeur limite de température prédéfinie, **caractérisé en ce que**
le dispositif de communication mobile envoie de manière entièrement automatique le signal de démarrage au moyen d'une détection de position continue du dispositif de communication mobile et de la comparaison avec la position de stationnement enregistrée au préalable du véhicule automobile (1), lorsque l'utilisateur (8) du véhicule automobile (1) comprenant le dispositif de communication mobile s'approche du véhicule (1) lorsqu'une distance prédéfinie entre le dispositif de communication mobile et le véhicule (1) est dépassée vers le bas.

2. Procédé selon la revendication 1, **caractérisé en ce que** la valeur limite de température prédéfinie est prédéfinie entre 0 et 5 °C, de préférence à environ 2°C.

3. Procédé selon la revendication 1 ou la revendication 2, **caractérisé en ce que** le dispositif de communication mobile envoie le signal de démarrage après un actionnement actif de la part de l'utilisateur (8).

4. Procédé selon l'une quelconque des revendications précédentes, **caractérisé en ce que** la distance prédéfinie entre le dispositif de communication mobile et le véhicule automobile (1) est définie à environ 100 m.

5. Procédé selon l'une quelconque des revendications précédentes, **caractérisé en ce que** lors du dépassement vers le bas d'une distance minimale prédéfinie de la distance entre le dispositif de communication mobile et le véhicule (1), telle qu'environ 2 à 5 m, le signal de démarrage est envoyé sans actionnement actif.

6. Procédé selon l'une quelconque des revendications précédentes, **caractérisé en ce qu'**on utilise un programme en cours sur le dispositif de communication mobile pour le déclenchement à distance.

7. Procédé selon l'une quelconque des revendications précédentes, **caractérisé en ce que** le dispositif de communication mobile est un téléphone portable, un téléphone intelligent ou une tablette PC comprenant un téléphone portable intégré.

8. Procédé selon l'une quelconque des revendications précédentes, **caractérisé en ce que** lors du stationnement de véhicule automobile (1) une position de stationnement du véhicule automobile (1) est détectée et enregistrée par le dispositif de communication mobile, à la suite de quoi par comparaison de position entre la position réelle détectée du dispositif de communication mobile et la position de stationnement enregistrée du véhicule automobile (1) est déterminée la distance entre le véhicule (1) et le dispositif de communication mobile.
